# EUROPEAN PATENT APPLICATION

(11) **EP 3 015 837 A1**
(43) Date of publication of application: **04.05.2016**
(21) Application number: 14191170.1
(22) Date of filing: 30.10.2014
(51) Int. Cl.: G01L 3/10

(54) **Torque measuring device, apparatus including a torque measuring device and method for measuring a torque**

(71) Applicant: Aktiebolaget SKF, 415 50 Göteborg (SE)
(72) Inventor: Niarfeix, François, 37540 SAINT-CYR-SUR-LOIRE (FR)
(74) Representative: Tweedlie, Diane Harkness

(57) **Abstract**

The invention relates to a torque measuring device including a torsion bar (10) configured to transmit a torque to be measured, a first encoder device (12) and a second encoder device (14) attached to the torsion bar (10) at different positions, wherein each of the encoder devices (12, 14) includes an encoder wheel (12a, 14a) having elements arranged in a regular pattern, and at least one sensor (12b, 14b) configured to generate a pulse signal when said elements of the regular pattern pass the sensor (12b, 14b), and a data processing unit (16) configured to calculate a torque applied to the torsion bar (10) based on the output signals of the encoder devices (12, 14).

It is proposed that the data processing unit (16) comprises at least one counter unit (18) having an incrementing input (18a) and a decrementing input (18b), wherein the pulse signals output by the first encoder device (12) are input to the incrementing input (18a) and the pulse signals output by the second encoder device (14) are input to the decrementing input (18b) and in that the data processing unit (16) is configured to calculate the torque as a function of a counter value of the counter unit (18).

## Description

### Background of the Invention

The document FR 288 918 discloses a torque measuring device including a torsion bar configured to transmit a torque to be measured, a first encoder device and a second encoder device connected the torsion bar at different positions. The values output by the encoder devices are absolute angles, which may change rapidly of the shaft acting as the torsion bar is rotating with high velocity.

The calculation of absolute angles requires data processing capacities and results in a latency of the measurement. Fluctuations in the rotation speed may have an impact on the torque values measured.

### Summary of the Invention

The object of the invention is to provide a torque measuring device with low latency and reduced influence of the rotation speed of the torsion bar.

The invention relates to a torque measuring device including a torsion bar configured to transmit a torque to be measured, a first encoder device and a second encoder device, both encoder devices being connected to the torsion bar at different positions.

Each of the encoder devices includes an encoder wheel having elements arranged in a regular pattern. The elements can be magnetized areas with alternating magnetization directions in the case of magnetic encoders or optical windows and/or opaque or black parts in the case of optical encoders.

Each of the encoder devices further includes at least one sensor configured to generate a pulse signal when said elements of the regular pattern pass the sensor.

The torque measuring device further comprises a data processing unit configured to calculate a torque applied to the torsion bar based on the output signals of the encoder devices.

In order to simplify the data processing and to reduce the latency of the calculus, the invention proposes to provide the data processing unit with at least one counter unit having an incrementing input and a decrementing input, wherein the pulse signals output by the first encoder device are input to the incrementing input and the pulse signals output by the second encoder device are input to the decrementing input and in that the data processing unit is configured to calculate the torque as a function of a counter value of the counter unit.

The value of the counter unit will be directly proportional to the torque and stays within a limited range even in the case of high rotatory speeds of the shaft or torsion bar. For high speeds, the frequency incrementing counter signals will increase in the same way as the frequency of the decrementing counter signals such that no net effect on the counter value will be measurable. At the same time, the complexity of the calculations are strongly reduced because calculating two absolute angles of the encoder wheels can be dispensed with.

In a preferred embodiment, the encoder devices are formed as sensor bearings with incremental encoders. Sensor bearings with integrated incremental encoders are available in high qualities at reasonable price.

It is further proposed that the encoder devices comprise transducer units for transforming the raw pulse signals into digital output signals with predefined amplitude. Preferably, the regular pattern of the encoder wheel is a magnetic pattern and has at least 3200 cycles or magnetic events per revolution, wherein the encoder devices are further optionally configured to output signals with quadrature. In the case of a magnetic encoder, the 3200 cycles or magnetic events correspond to 6400 electrical events, which can be even doubled by quadrature. The resulting 12800 electrical events in the encoders on both sides of the torsion bar lead to a high precision. The resolution and the measuring range can be adapted to the application by a suitable choice of the torsion bar.

In a preferred embodiment of the invention, the data processing unit is configured to calculate the torque by multiplying the counter value of the counter unit with a predetermined constant. The counter value can be subjected to averaging or low-pass filtering if desired.

Further, it is proposed that the data processing unit comprises means for linearizing the pulse signals output by the first encoder device and the pulse signals output by the second encoder device prior to being input to the incrementing input and the decrementing input of the counter unit. The linearization may include restoring the pulse shapes, combining quadrature signals with primary signals, decoding signals and switching the signal inputs if the torque direction and/or rotation direction changes if necessary.

A further aspect of the invention relates to an apparatus equipped with a torque measuring device as described above.

A yet further aspect of the invention relates to a method for measuring a torque acting on a torsion bar using a first encoder device and a second encoder device as described above. The method comprises the step of calculating a torque applied to the torsion bar based on the output signals of the encoder devices.

It is proposed that the method includes using at least one counter unit having an incrementing input and a decrementing input, wherein the pulse signals output by the first encoder device are input to the incrementing input and the pulse signals output by the second encoder device are input to the decrementing input and in that the method includes calculating the torque as a function of a counter value of the counter unit.

The above embodiments of the invention as well as the appended claims and figures show multiple characterizing features of the invention in specific combinations. The skilled person will easily be able to consider further combinations or sub-combinations of these features in order to adapt the invention as defined in the claims to his specific needs.

### Brief Description of the Figures

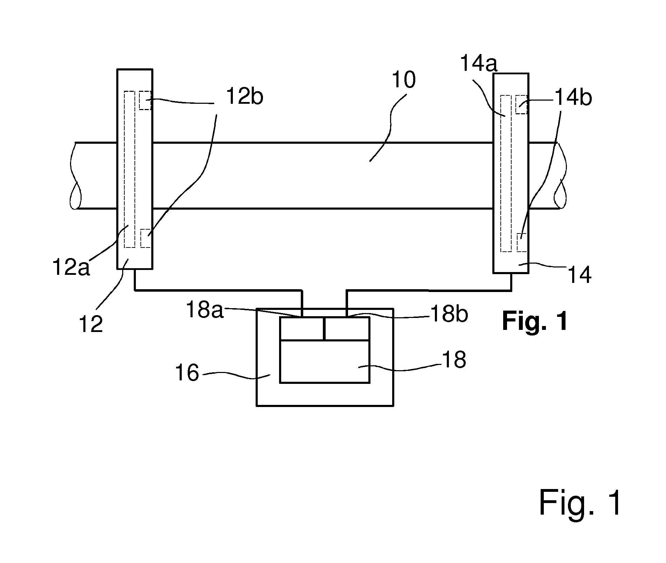

Fig. 1 shows a torque measuring device according to the invention in a schematic representation.

### Detailed Description of the Embodiment

Fig. 1 shows a torque measuring device including a torsion bar 10 configured to transmit a torque to be measured, a first incremental encoder device 12 and a second incremental device 14. The encoder devices are connected to the torsion bar 10 at different positions, that is to say that they are fast in rotation with the torsion bar 10 at different positions on the torsion bar. The first incremental encoder device 12 and the second incremental encoder device 14 are identical in terms of resolution such that a rotation with the same angle and speed results in the same pulse pattern.

Each of the encoder devices 12, 14 includes an encoder wheel 12a, 14a having elements arranged in a regular pattern. The elements of the pattern are magnetized areas with alternating magnetization in the embodiment illustrated. However, any other kind of incremental encoder could be used as well. Preferably, the regular pattern of the encoder wheel has at least 3200 cycles or magnetic events per revolution and the encoder devices 12, 14 are configured to output signals with quadrature.

The encoder wheels 12a, 14a of the encoder devices 12, 14 are attached to the two ends of the torsion bar 10. A torque acting on the torsion bar 10 leads to a torsional deformation of the torsion bar 10. The deformation leads to a relative rotation of the encoder wheels 12a, 14a. As a consequence, the difference between the absolute angles of the encoder wheels12a, 14a is, besides of a constant offset, directly proportional to the torque transmitted by the torsion bar 10 as long as non-linear deformations are negligible.

Each of the encoder devices 12, 14 further includes one sensor 12b, 14b or multiple sensors configured to generate a pulse signal when the elements of the regular pattern pass the sensor 12b, 14b. In the case of magnetic encoders the sensors 12b, 14b are preferably formed as Hall sensors or miniaturized coils. The pulse signal of the sensors 12b, 14b is a raw signal. In this context, the expression "pulse" signal is to be construed in a wide sense and should include signals lending themselves to generate a train of sharp pulses such as oscillating signals. The encoder devices 12, 14 preferably comprise integrated signal processing circuits and/or transducers for generating a clear signal every time an element of the pattern or a boundary between elements passes the sensor 12b, 14b.

The torque measuring device further comprises a data processing unit 16 formed as a microprocessor, which is configured to calculate a torque applied to the torsion bar 10 based on the output signals of the encoder devices 12, 14. The data processing unit 16 includes at least one counter unit 18 having an incrementing input 18a and a decrementing input 18b.

After being linearized and processed as explained in further details below, the pulse signals output by the first encoder device 12 are input to the incrementing input 18a and the pulse signals output by the second encoder device 14 are input to the decrementing input 18b and the data processing unit 16 is configured to calculate the torque as a function of a counter value of the counter unit 18. The actual calculation of the torque is done by multiplying the counter value of the counter unit 18 with a predetermined constant depending on the Young's modulus of the torsion bar 10.

The data processing unit 16 comprises means for linearizing the pulse signals output by the first encoder device 12 and the pulse signals output by the second encoder device 14 prior to being input to the incrementing input 18a and the decrementing input 18b of the counter unit 18. Depending on serial communication interface transmitting the pulse signals form the encoder devices 12, 14 to the data processing unit 16, the linearization may include restoring the pulse shapes, combining quadrature signals with primary signals, decoding signals and switching the signal inputs if the torque direction and/or rotation direction changes if necessary.

The above described torque measuring device can be integrated in any kind of apparatus and implements a method for measuring a torque acting on the torsion bar 10 using the first encoder device 12 and the second encoder device 14 as described above. The method comprises the step of calculating a torque applied to the torsion bar 10 based on the output signals of the encoder devices 12, 14.

## Claims

1. Torque measuring device including:
a. a torsion bar (10) configured to transmit a torque to be measured,
b. a first encoder device (12) and a second encoder device (14) attached to the torsion bar (10) at different positions, wherein each of the encoder devices (12, 14) includes:
i. an encoder wheel (12a, 14a) having elements arranged in a regular pattern, and
ii. at least one sensor (12b, 14b) configured to generate a pulse signal when said elements of the regular pattern pass the sensor (12b, 14b), and
c. a data processing unit (16) configured to calculate a torque applied to the torsion bar (10) based on the output signals of the encoder devices (12, 14),
**characterized in that the** data processing unit (16) comprises at least one counter unit (18) having an incrementing input (18a) and a decrementing input (18b), wherein the pulse signals output by the first encoder device (12) are input to the incrementing input (18a) and the pulse signals output by the second encoder device (14) are input to the decrementing input (18b) and **in that** the data processing unit (16) is configured to calculate the torque as a function of a counter value of the counter unit (18).

2. Torque measuring device according to claim 1,
**characterized in that**
the encoder devices (12, 14) are formed as sensor bearings with incremental encoders.

3. Torque measuring device according to one of the preceding claims,
**characterized in that**
the encoder devices (12, 14) comprise transducer units and/or means for transforming the raw pulse signals with predefined amplitude.

4. Torque measuring device according to one of the preceding claims,
**characterized in that** the regular pattern of the encoder wheel (12a, 14a) has at least 3200 cycles per revolution.

5. Torque measuring device according to one of the preceding claims,
**characterized in that** the encoder devices (12, 14) are configured to output signals with quadrature.

6. Torque measuring device according to one of the preceding claims, **characterized in that** the regular pattern is a magnetic pattern.

7. Torque measuring device according to one of the preceding claims,
**characterized in that**
the data processing unit (16) is configured to calculate the torque by multiplying the counter value of the counter unit (18) with a predetermined constant.

8. Torque measuring device according to one of the preceding claims,
**characterized in that**
the data processing unit (16) comprises means for linearizing the pulse signals output by the first encoder device (12) and the pulse signals output by the second encoder device (14) prior to being input to the incrementing input (18a) and the decrementing input (18b) of the counter unit (18).

9. Apparatus equipped with a torque measuring device according to one of the preceding claims.

10. Method for measuring a torque acting on a torsion bar using a first encoder device and a second a first encoder device connected the torsion bar at different positions, wherein each of the encoder devices includes:
i. an encoder wheel having elements arranged in a regular pattern, and
ii. at least one sensor configured to generate a pulse signal when said elements of the regular pattern pass the sensor,
wherein the method comprises the step of calculating a torque applied to the torsion bar based on the output signals of the encoder devices, **characterized in that the** method includes using least one counter unit having an incrementing input and a decrementing input, wherein the pulse signals output by the first encoder device are input to the incrementing input and the pulse signals output by the second encoder device are input to the decrementing input and **in that** the method includes calculating the torque as a function of a counter value of the counter unit.
